# EUROPÄISCHE PATENTSCHRIFT

(11) **EP 1 528 017 B1**
(45) Veröffentlichungstag und Bekanntmachung des Hinweises auf die Patenterteilung: **28.12.2005**
(21) Anmeldenummer: 03024719.1
(22) Anmeldetag: 29.10.2003
(51) Int. Cl.: B65G 17/42

(54) **Transporteinrichtung für Hohlkörper**
Transport device for hollow bodies
Dispositif de transport pour corps creux

(43) Veröffentlichungstag der Anmeldung: 04.05.2005
(73) Patentinhaber: HINTERKOPF GmbH, 73054 Eislingen (DE)
(72) Erfinder: Aichele, Helmut, 73033 Göppingen (DE)
(74) Vertreter: Abel, Martin

(56) Entgegenhaltungen:
- EP-A- 0 491 511
- EP-A- 1 048 593
- PATENT ABSTRACTS OF JAPAN Bd. 0101, Nr. 93 (M-496), 8. Juli 1986 (1986-07-08) & JP 61 037611 A (TOYO SEIKAN KAISHA LTD), 22. Februar 1986 (1986-02-22)

## Beschreibung

Die Erfindung betrifft eine Transporteinrichtung für an ihrer Oberfläche zu behandelnde und/oder bereits behandelte Hohlkörper wie Dosen, Tuben, Hülsen oder dergleichen, mit einer Transportkette, die einen Kettenstrang mit aufeinanderfolgenden Kettengliedern aufweist, an dem an in Strang-Längsrichtung beabstandeten Bestückungsplätzen jeweils ein zur lösbaren Bestückung mit einem Hohlkörper vorgesehener, quer abstehender Trägerstift angeordnet ist, wobei die Transportkette ausgebildet ist, um im Betrieb unter anderem um mindestens ein Umlenkrad umzulaufen und dabei eine Umlaufbewegung entlang einer gekrümmten Umlaufbahn auszuführen, wobei die Trägerstifte an vom Kettenstrang wegragenden Tragarmen angeordnet sind, die bei sich krümmendem Kettenstrang unter Mitnahme des zugehörigen Trägerstiftes vom Krümmungszentrum weg nach außen schwenken, wobei sich der Abstand der Trägerstifte zum Kettenstrang verändert.

Transporteinrichtungen dieser Art, wie sie beispielsweise aus der EP-A-1 048 593 hervorgehen, werden meist im Zusammenhang mit dem Dekorieren, insbesondere dem Bedrucken von Dosen, Tuben, Hülsen oder sonstigen Hohlkörpern eingesetzt. Dabei dient die Transporteinrichtung beispielsweise zum Hindurchschleusen der Hohlkörper durch Behandlungszonen, insbesondere in Trocknern oder Waschanlagen, oder zum Zuführen und Abführen zu bzw. von einer Druckstation oder einer sonstigen Behandlungseinheit. Die Transporteinrichtung verfügt über eine Transportkette, die entsprechend dem gewünschten Transportweg um ein oder mehrere Umlenkräder umläuft und die einen aus mehreren aufeinanderfolgenden Kettengliedern zusammengesetzten Kettenstrang aufweist, an dem in Abständen rechtwinkelig zur Transportebene horizontal wegragende Trägerstifte befestigt sind, die mit den zu transportierenden Hohlkörpern bestückt werden.

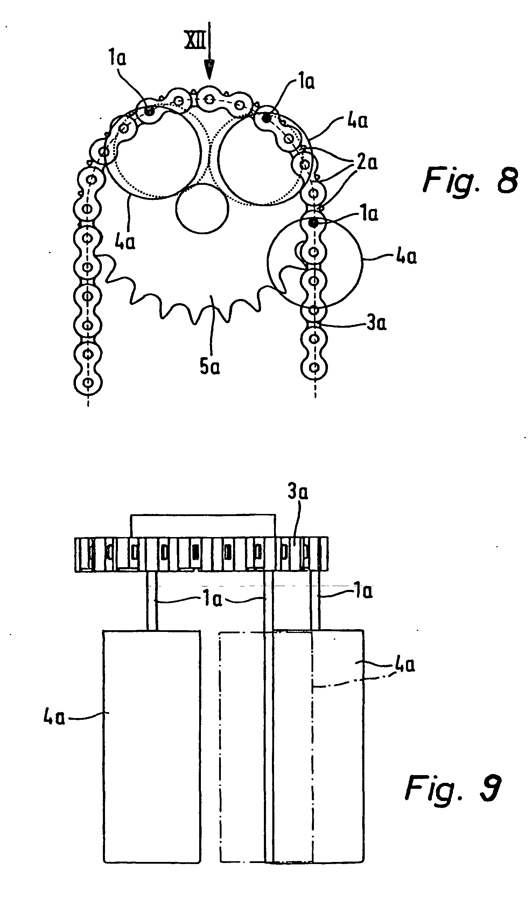

Wie aus Fig. 8 und 9 der beiliegenden Zeichnung hervorgeht, die eine mögliche Ausführungsform des Standes der Technik exemplarisch illustrieren sollen, sind die Trägerstifte 1a bisher meist an den Kettengliedern 2a des Kettenstranges 3a befestigt, wobei man einen Abstand wählt, der ein gegenseitiges Berühren der lose auf den Trägerstiften 1a sitzenden Hohlkörper 4a nach Möglichkeit verhindert. Andererseits geht das Bestreben dahin, den Abstand zwischen den Trägerstiften so gering wie möglich zu halten, um möglichst viele Bestückungsplätze pro Längeneinheit des Kettenstranges 3a zur Verfügung stellen zu können und so die Realisierung von Transporteinrichtungen mit geringem Bauvolumen zu begünstigen. Allerdings ergibt sich das Problem, dass die Trägerstifte 1a vor allem bei einem Umlauf um den nach oben weisenden Umfangsabschnitt eines Umlenkrades 5a infolge der daraus resultierenden Krümmung des Kettenstranges 3a kurzzeitig näher zusammenrücken, sodass sich die in der Regel leicht pendelnden Hohlkörper 4a berühren können, wie dies in Fig. 11 gepunktet angedeutet ist. Der Abstand der Trägerstifte 1a muss daher relativ groß gewählt werden, sodass relativ große Kettenlängen erforderlich sind, was wiederum großvolumige Anlagen erfordert.

Die EP-A-1 048 593 beschreibt jedoch auch Bauformen, bei denen die Trägerstifte an vom Kettenstrang wegragenden, quer oder längs des Kettenstranges ausgerichteten Tragarmen angeordnet sind. Auf diese Weise wird einer Verringerung des gegenseitigen Abstandes der Trägerstifte beim Umlaufen um ein Umlenkrad entgegengewirkt. Die die Trägerstifte aufweisenden Tragarme wirken als Hebel, die die an ihnen sitzenden Trägerstifte nach außen verlagern, wenn der Kettenstrang durch ein Umlenkrad in einen gekrümmten Bahnverlauf gezwungen wird. Die an den Trägerstiften hängenden Hohlkörper werden somit beim Umlaufen um ein Umlenkrad auf einem größeren Radius transportiert und können sich daher nicht mehr oder zumindest nur noch unter sehr ungünstigen Pendelungsumständen gegenseitig berühren. Durch diese Maßnahme können die Mindestabstände der Trägerstifte insgesamt verringert werden, was eine Erhöhung der Bestückungsdichte der Transportkette zulässt und folglich eine Verringerung der Gesamtabmessungen der Transporteinrichtung ermöglicht.

Es ist die Aufgabe der vorliegenden Erfindung, Maßnahmen zu treffen, die bei reduzierter Pendelneigung eine große Bestückungsdichte einer Transportkette ermöglichen.

Zur Lösung dieser Aufgabe ist vorgesehen, dass an den Bestückungsplätzen zusätzlich zu dem Trägerstift jeweils mindestens ein zu dem Trägerstift beabstandeter Zusatzträgerstift vorgesehen ist, wobei zwischen Trägerstift und Zusatzträgerstift eine starre Verbindung vorliegt, sodass die Stifte bei sich krümmendem Kettenstrang gemeinsam relativ zum Kettenstrang verschwenkt werden, wobei die einander zugeordneten Trägerstifte und Zusatzträgerstifte im Bereich ihrer dem Kettenstrang entgegengesetzten Endabschnitte unter Bildung eines Trägerbügels miteinander verbunden sind.

Somit befindet sich an den einzelnen Bestückungsplätzen zusätzlich zu dem Trägerstift jeweils mindestens ein Zusatzträgerstift, der mit Abstand zum zugeordneten Trägerstift angeordnet ist und der mit dem Trägerstift starr verbunden ist. Der Trägerstift und der zugeordnete, mindestens eine Zusatzträgerstift werden somit bei sich krümmendem Kettenstrang gemeinsam relativ zum Kettenstrang verschwenkt. Bei dieser Bauform hat in der Regel der eine Stab eine überwiegende Trägerfunktion, während der andere Stab, durch Kontakt mit der Innenoberfläche des Hohlkörpers, die Pendelneigung verringert. Entsprechend der momentanen Bewegungsrichtung der Transportkette, beispielsweise bei ansteigender oder bei abfallender Bewegungsrichtung, kann die Trägerfunktion und die Pendel-Verhinderungsfunktion zwischen den Stäben eines jeweiligen Bestückungsplatzes wechseln. Der Wechsel kann insbesondere beim Umlaufen um ein Umlenkrad, aufgrund des gekrümmten Bahnverlaufes des Kettenstranges, allmählich stattfinden. Zu Gunsten einer hohen Stabilität ist es von Vorteil, wenn die einander zugeordneten Trägerstifte und Zusatzträgerstifte im Bereich ihrer dem Kettenstrang entgegengesetzten Endabschnitte so miteinander verbunden sind, dass sich eine als Trägerbügel bezeichenbare bügelartige Konstellation ergibt.

Vorteilhafte Weiterbildungen der Erfindung gehen aus den Unteransprüchen hervor.

Die Tragarme sind zweckmäßigerweise jeweils derart starr mit einem Kettenglied verbunden, dass sie dessen Orientierungsänderungen mitmachen. Wenn das Kettenglied beim Umlaufen um ein Umlenkrad seine Neigung im Raum verändert, ergibt sich selbsttätig das gewünschte Ausschwenken des Tragarmes und des an diesem befestigten Trägerstiftes.

Zweckmäßigerweise sind die Tragarme jeweils Bestandteil eines über einen Befestigungsabschnitt am Kettenstrang fixierten Tragelementes. Bevorzugt sitzt der Trägerstift an dem dem Befestigungsabschnitt entgegengesetzten Endbereich des Tragarmes.

In der Regel setzt sich eine Transportkette aus zwei Arten von Kettengliedern zusammen, nämlich aus abwechselnd aufeinanderfolgend angeordneten, in der Regel auch als Innenglieder bezeichneten Zwischengliedern und aus Verbindungsgliedern. Die Verbindungsglieder besitzen seitliche Verbindungslaschen, die sich zwischen die benachbarten Zwischenglieder durchsetzenden Verbindungsbolzen erstrecken. Es ist nun möglich, die Tragelemente so auszubilden, dass ihre Befestigungsabschnitte unmittelbar als Verbindungslaschen fungieren, sodass auf zusätzliche Verbindungslaschen verzichtet werden kann. Alternativ können aber die Tragelemente auch auf zusätzlich vorgesehene Verbindungslaschen aufgesetzt werden.

Es ist des Weiteren von Vorteil, wenn die Trägerstifte derart an den Tragarmen angeordnet sind, dass sie bereits im ungekrümmten, linearen Zustand des Kettenstranges mit Abstand neben der Strang-Längsachse angeordnet sind. Bezogen auf ein Umlenkrad, das vom Kettenstrang im Bereich seines oberen Umfangsabschnittes umlaufen wird, liegen die Trägerstifte zweckmäßigerweise außerhalb der Strang-Längsachse. Da die Hohlkörper hängend auf den Trägerstiften sitzen, ist die geschilderte Problematik der gegenseitigen Annäherung benachbarter Trägerstifte vor allem beim Umlaufen um einen oberen Umfangsabschnitt eines Umlenkrades besonders relevant, während sich beim Umlaufen um einen unteren Umfangsabschnitt eines Umlenkrades von Hause aus größere Abstände benachbarter Hohlkörper einstellen, weil sie nach unten hängen, in Richtung weg vom Krümmungszentrum.

Der Trägerstift und der Zusatzträgerstift eines jeweiligen Bestückungsplatzes sind zweckmäßigerweise so angeordnet, dass sie gemeinsam auf einer Geraden liegen, die mit Bezug zur Strang-Längsachse geneigt verläuft. Der Trägerstift und der Zusatzträgerstift können hierbei zweckmäßigerweise auf einander entgegengesetzten Seiten der Strang-Längsachse liegen.

Wenn im Verbindungsbereich der einander zugeordneten Trägerstifte und Zusatzträgerstifte eine kreisbogenförmig gekrümmte Abrollfläche vorgesehen ist, die beispielsweise von einem scheibenartigen Abrollelement definiert werden kann, ergibt sich bei einer Änderung des Bahnverlaufes der Transportkette ein besonders sanfter Übergang des Hohlkörpers zwischen den Stäben des betreffenden Bestückungsplatzes.

Nachfolgend wird die Erfindung anhand der beiliegenden Zeichnung näher erläutert. In dieser zeigen:
- Fig. 1: in schematischer Darstellung einen möglichen Aufbau einer Transporteinrichtung, in der die Erfindung realisiert ist,
- Fig. 2: den in Fig. 1 strichpunktiert markierten Ausschnitt II der Transporteinrichtung in einer alternativen Ausführungsform,
- Fig. 3: die Anordnung aus Fig. 2 in einer Ansicht von oben mit Blickrichtung gemäß Pfeil VI,
- Fig. 4: den in Fig. 2 rechts abgebildeten, vertikal ansteigenden Kettenstrangabschnitt in perspektivischer Darstellung,
- Fig. 5 und 6: einen Längenabschnitt der beim Ausführungsbeispiel der Fig. 2 bis 4 eingesetzten Transportkette bei vertikal ansteigendem Verlauf (Fig. 5) und bei horizontalem Verlauf (Fig. 6),
- Fig. 7: einen der Darstellungsweise der Fig. 4 entsprechenden Ausschnitt einer weiteren Ausführungsform der Transporteinrichtung und
- Fig. 8 und 9: exemplarisch einen Ausschnitt einer Transporteinrichtung des Standes der Technik, wobei die Fig. 8 eine Vorderansicht und die Fig. 9 eine Draufsicht mit Blickrichtung gemäß Pfeil XII darstellt.

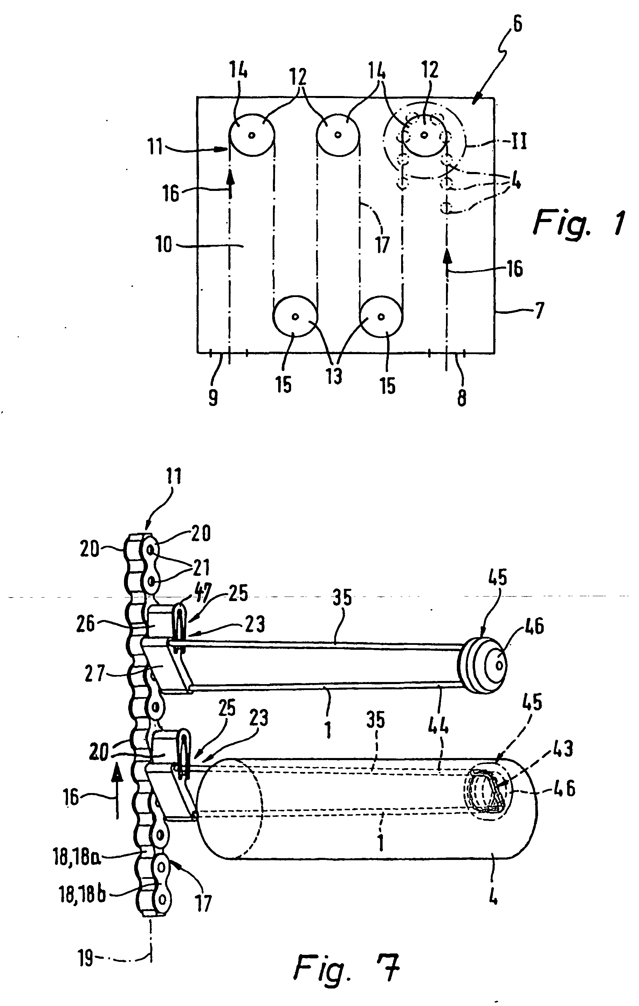

Die Fig. 1 zeigt eine Transporteinrichtung 6, die beispielsweise Bestandteil eines Trockners ist, durch den zuvor einer Oberflächenbehandlung ausgesetzte Hohlkörper 4 hindurchgeschleust werden. Der Trockner verfügt über ein Gehäuse 7 mit einer Zuführöffnung 8 und einer Abführöffnung 9 und mit nicht näher gezeigten Heizmitteln zum Aufheizen des Innenraumes 10 des Gehäuses 7.

Die Transporteinrichtung 6 verfügt über eine Transportkette 11, die im Innenraum 10 einen mäanderförmigen Verlauf hat, der dadurch vorgegeben ist, dass die Transportkette 11 um mehrere zueinander beabstandete Umlenkräder 12, 13 herumgeschlungen ist. Die Drehachsen der Umlenkräder 12, 13 sind horizontal ausgerichtet, wobei die Transportkette 11 bei mehreren ersten Umlenkrädern 12 um den nach oben weisenden oberen Umfangsabschnitt 14 und bei mehreren zweiten Umlenkrädern 13 um den nach unten weisenden unteren Umfangsabschnitt 15 umläuft. Beim Umlaufen um ein Umlenkrad 12, 13 durchläuft die Transportkette 11 eine gekrümmte Umlaufbahn, während sie beim Übergang zwischen zwei Umlenkrädern 12, 13 eine geradlinige Bahn durchläuft.

Die Transportkette 11 bewegt sich in einer durch einen Pfeil angedeuteten Transportrichtung 16, wobei der Antrieb über eines oder mehrere der Umlenkräder 12, 13 stattfindet. Die Umlenkräder 12, 13 sind zweckmäßigerweise als Zahnräder ausgebildet, die mit dem um sie umlaufenden Längenabschnitt der Transportkette 11 in Verzahnungseingriff stehen.

Die Transportkette 11 verfügt über einen in Querrichtung flexiblen Kettenstrang 17, der sich aus mehreren, in Richtung der Strang-Längsachse 19 aufeinanderfolgenden Kettengliedern 18 zusammensetzt. Die Kettenglieder 18 beinhalten in der Regel abwechselnd aufeinanderfolgende Zwischenglieder 18a und Verbindungsglieder 18b, wobei die Verbindungsglieder 18b jeweils zwei quer zur Strang-Längsrichtung beabstandete Verbindungslaschen 20 und zwei sich mit Abstand zueinander zwischen den Verbindungslaschen 20 erstreckende Verbindungsbolzen 21 aufweisen. Die Verbindungsbolzen 21 durchsetzen jeweils drehbar das dem Verbindungsglied 18b vor- und nachgeordnete Zwischenglied 18a, sodass sich in Strang-Längsrichtung durchgängig eine formschlüssige Verbindung der Kettenglieder 18 einstellt, wobei die einzelnen Kettenglieder 18 im Bereich der Verbindungsbolzen 21 in der Ausdehnungsebene 22 des Kettenstranges 17 verschwenkbar sind.

An dem Kettenstrang 17 sind in Strang-Längsrichtung beabstandete Bestückungsplätze 23 vorgesehen, an denen die Transportkette 11 lösbar mit an der Oberfläche zu behandelnden und/oder bereits behandelten Hohlkörpern 4 lösbar bestückt werden kann. Bei den Hohlkörpern 4 handelt es sich beispielsweise um Dosen, Tuben, Hülsen oder vergleichbare Produkte. Die Oberflächenbehandlung kann beispielsweise in einem Bedrucken, Lackieren, Waschen oder dergleichen bestehen.

Zur Bestückung mit den Hohlkörpern 4 ist die Transportkette 11 an jedem Bestückungsplatz 23 mit einem quer und insbesondere rechtwinkelig von der Ausdehnungsebene 22 abstehenden, im Wesentlichen horizontal verlaufenden Trägerstift 1 ausgestattet. Der Querschnitt des Trägerstiftes 1 ist geringer als der Innenquerschnitt der zu transportierenden Hohlkörper 4, sodass letztere problemlos auf den zugeordneten Trägerstift 1 aufsteckbar sind. Im aufgesteckten Zustand erstreckt sich der Hohlkörper 4 etwa parallel zum zugeordneten Trägerstift 1, wobei der Trägerstift 1 von einer Stirnseite her in den Hohlkörper 4 eintaucht und letzterer mit einem oben liegenden Innenumfangsabschnitt 24 auf dem Trägestift 1 aufliegt und somit aufgehängt ist.

Die Trägerstifte 1 sitzen nicht direkt am Kettenstrang 17, sondern sind an diesem unter Vermittlung einzelner Tragelemente 25 fixiert. Jedes Tragelement 25 hat einen Befestigungsabschnitt 26, über den es starr mit einem Kettenglied 18 verbunden ist, sowie einen von dem Befestigungsabschnitt 26 und mithin auch vom Kettenstrang 17 in einer zu der Ausdehnungsebene 22 parallelen Ebene wegragenden Tragarm 27, der letztlich den zugehörigen Trägerstift 1 trägt. Jeder Tragarm 27 ragt quer zur Längsrichtung des zugeordneten Trägerstiftes 1 vom Kettenstrang 17 weg, wobei er frei endet und wobei sich der Trägerstift 1 bevorzugt an dem dem Befestigungsabschnitt 26 entgegengesetzten Endbereich des Tragarmes 27 befindet. Der Tragarm 27 und der Befestigungsabschnitt 26 sind zweckmäßigerweise einstückig miteinander verbunden.

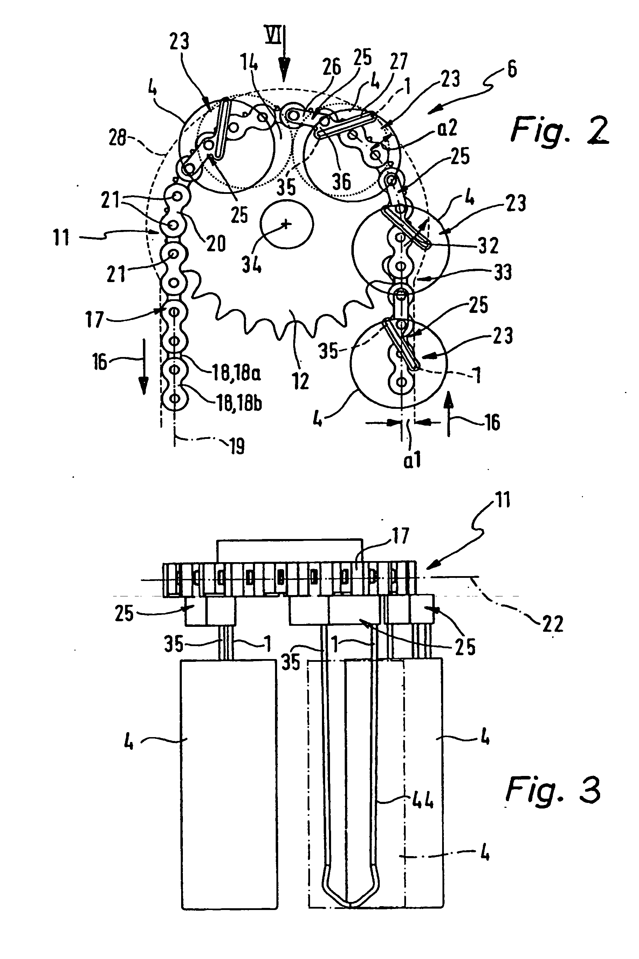

In Fig. 2 ist gestrichelt die Bewegungsbahn 28 angedeutet, entlang der sich die Trägerstifte 1 bei der Transportbewegung 16 der Transportkette 11 verlagern. Es ist ersichtlich, dass beim Umlaufen der Transportkette 11 um ein Umlenkrad 12 und dem daraus resultierenden Krümmungsvorgang des Kettenstrangs 17 die Tragarme 27 unter Mitnahme des zugehörigen Trägerstiftes 1 vom Krümmungszentrum 34 weg nach außen geschwenkt sind, wobei die Schwenkbewegung durch einen Pfeil bei 32 angedeutet ist. Das Schwenkzentrum für die Tragarme 27 ist jeweils das mit dem betreffenden Tragarm 27 versehene Kettenglied, das beim Übertritt in den gekrümmten Abschnitt der Bewegungsbahn 28 beim Umlaufen um ein Umlenkrad 12 relativ zum jeweils nachfolgenden benachbarten Kettenglied verschwenkt wird, sodass der an dem starr mit ihm verbundenen Tragarm 27 angeordnete Trägerstift 1 so nach außen schwenkt, dass sich sein Abstand zum Kettenstrang 17 verändert.

Bevorzugt sind die Trägerstifte 1 derart an den Tragarmen 27 angeordnet, dass sie bereits im ungekrümmten, linearen Zustand des Kettenstranges 17 mit Abstand neben der Strang-Längsachse 19 angeordnet sind. Insbesondere ist die Anordnung so getroffen, dass der Trägerstift 1 in dem eine ansteigende Bewegung ausführenden Kettenstrangabschnitt 33 auf der dem vorgelagerten ersten Umlenkrad 12 entgegengesetzten Außenseite des Kettenstranges 17 liegt. Der Abstand zwischen den Trägerstiften 1 und der Strang-Längsachse 19 in diesem Bereich ist mit a1 bezeichnet. In dem Moment, in dem der Kettenstrang 17 aufgrund des Umlaufens um den oberen Umfangsabschnitt 14 des ersten Umlenkrades 12 nach innen gekrümmt wird, schwenkt der Tragarm 27 mit daran fixiertem Trägerstift 1 gemäß Pfeil 32 nach außen, sodass sich zwischen dem Trägerstift 1 und der Strang-Längsachse 19 ein vergrößerter Abstand a2 einstellt, der beibehalten wird, bis sich die Krümmung der Umlaufbahn 28 wieder verringert.

Dies führt dazu, dass sich der Abstand zwischen den am gekrümmten Kettenstrangabschnitt gehaltenen Trägerstiften 1 ebenfalls vergrößert, zumindest aber nicht verringert.

Verglichen mit einer Anordnung nach dem Stand der Technik gemäß Fig. 8 und 9, hat dies zur Folge, dass die vom Zentrum der aufgehängten Hohlkörper 14 durchlaufene Bahn einen größeren radialen Abstand zu dem mit der Drehachse der Umlenkräder 12, 13 zusammenfallenden Krümmungszentrum 34 des Kettenstranges 17 aufweist, sodass die Hohlkörper 4 weiter voneinander abgerückt sind und sich nur dann gegenseitig berühren können, wenn sie - wie in Fig. 2 gepunktet angedeutet - extrem stark pendeln, was in der Praxis jedoch die Ausnahme ist.

Mithin werden die Hohlkörper 4 auch beim Umlaufen um ein Umlenkrad 12, 13 effektiv vor einem gegenseitigen Berühren geschützt. Dies verhindert Beeinträchtigungen an der zuvor unter Umständen eine Behandlung erhaltenen Außenoberfläche.

Beim Umlaufen des Kettenstrangs 17 um einen unteren Umfangsabschnitt 15 eines zweiten Umlenkrades 13 tritt derselbe Effekt auf, wobei dort die Situation allerdings von vorneherein weniger kritisch ist, weil die Hohlkörper 4 von Hause aus eine sich vom zugeordneten Krümmungszentrum entfernende, hängende Position einnehmen und ihr Zentrum bereits auf einem Kreisbogen liegt, dessen Radius größer ist als der Krümmungsradius des Kettenstrangs 17.

Um die geschilderte Beabstandung der Trägerstifte 1 vom ungekrümmten Kettenstrangabschnitt zu erzielen, sind die Tragarme 27, wie dies beim Ausführungsbeispiel der Fall ist, im ungekrümmten, linearen Zustand des Kettenstranges 17 schräg zur Strang-Längsachse 19 ausgerichtet. Beim Ausführungsbeispiel schließt der Tragarm 27 in diesem Zustand einen spitzen Winkel mit der Strang-Längsachse 19 ein, wobei sich dieser Winkel beim Einfahren in die gekrümmte Umlaufbahn vergrößert.

Aufgrund der sich beim Umlaufen um die ersten und zweiten Umlenkräder 12, 13 ändernden Krümmungsrichtung des Kettenstranges 17 sind die Tragelemente 25 bevorzugt seitlich am zugeordneten Kettenglied 18 angeordnet. Zweckmäßig ist dabei die aus Fig. 7 hervorgehende Bauform, bei der die Befestigungsabschnitte 26 der Tragelemente 25 jeweils die Funktion einer Verbindungslasche 20 übernehmen und anstelle einer gesonderten Verbindungslasche montiert sind. Dies reduziert den baulichen Aufwand zur Realisierung des Kettenstrangs 17.

Vorteile hat allerdings auch eine Bauform, bei der die Tragelemente 25 jeweils zusätzlich zu einer gesonderten Verbindungslasche 20 vorgesehen sind, wie dies beispielsweise in Figuren 2 bis 4 illustriert ist. Hier liegt dann die gesonderte Verbindungslasche mit der Innenfläche an den zu verbindenden Zwischengliedern an, während sie an ihrer Außenseite vom Befestigungsabschnitt des aufgesetzten Tragelements 25 flankiert ist.

Wie schon erwähnt, ist die Transportkette 11 grundsätzlich so aufgebaut, dass die einzelnen Zwischenglieder 18a jeweils zwei zueinander beabstandete Durchbrechungen aufweisen, wobei die eine Durchbrechung von einem Verbindungsbolzen 21 des sich einerseits anschließenden Verbindungsgliedes 18b und die andere Durchbrechung von einem Verbindungsbolzen 21 des sich auf der anderen Seite anschließenden Verbindungsgliedes 18b durchsetzt ist. Zwischen den beiden Verbindungsbolzen ersteckt sich auf entgegengesetzten Seiten der Zwischenglieder 18a eine Verbindungslasche 20, die ebenfalls über zwei Durchbrechungen verfügt, in welche die zugeordneten Verbindungsbolzen 21 eingreifen. Bei solchen Verbindungsgliedern 18b, die nicht mit einem Tragelement 25 ausgestattet sind, entspricht die Länge der Verbindungsbolzen der Dicke des Kettenstrangs, sodass sie nur minimal über die Außenfläche der Verbindungslaschen 20 überstehen. Die Verbindungslaschen 20 können dann durch Verstemmen oder sonstige Maßnahmen fest mit den Verbindungsbolzen 21 verbunden sein.

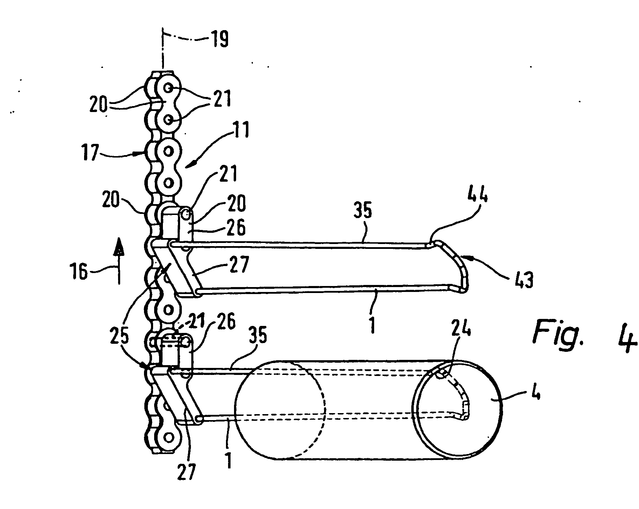

Soll hingegen ein Tragelement 25 fixiert werden, werden Verbindungsbolzen 21 eingesetzt, die über eine größere Länge verfügen, sodass sie an einer Längsseite über den Kettenstrang 17 vorstehen (siehe gestrichelte Darstellung in Figur 4). Auf diese vorstehenden Längenabschnitte zweier in Längsrichtung des Kettenstranges 17 benachbarter Verbindungsbolzen 21 ist dann das Tragelement 25 aufgesetzt, dessen Befestigungsabschnitt 26 über Ausnehmungen verfügt, in die die Verbindungsbolzen 21 eintauchen können. Diese Ausnehmungen sind zweckmäßigerweise von Durchbrechungen des Befestigungsabschnittes 26 gebildet.

Je nach Bauform besteht die weiter oben geschilderte Möglichkeit, auf der dem Tragelement 25 zugewandten Längsseite des Kettenstrangs 17 auf eine gesonderte Verbindungslasche zu verzichten, indem die Befestigungsabschnitte 26 unmittelbar selbst als Verbindungslaschen fungieren (vgl. Figur 2), oder aber es kann zwischen dem Befestigungsabschnitt 20 und den von den Verbindungsbolzen durchsetzten Zwischengliedern 18a eine gesonderte Verbindungslasche vorgesehen sein. Letzteres hat den Vorteil, dass man den Kettenstrang vor dem Bestücken mit Tragelementen 25 fest vormontieren kann, sodass der Zusammenbau des Kettenstrangs 17 und die Montage der Tragelemente 25 nacheinander und unabhängig voneinander durchgeführt werden können. Die jeweils unmittelbar unter den Tragelementen 25 liegenden Verbindungslaschen werden dabei zweckmäßigerweise im Presssitz auf den Verbindungsbolzen fixiert.

Die Fixierung der Befestigungsabschnitte 26 an den Verbindungsbolzen 21 kann beispielsweise mittels federnder, insbesondere U-förmig gestalteter Halteelemente geschehen, die auf überstehende Endabschnitte der Verbindungsbolzen 21 aufgesteckt werden, wie dies in Figur 10 bei 47 angedeutet ist. Alternativ besteht aber auch die beispielsweise aus Figur 4 hervorgehende Möglichkeit, die Endabschnitte der Verbindungsbolzen 21 mittels eines geeigneten Werkzeuges zu verstemmen bzw. zu verformen, sodass der erforderliche Zusammenhalt auch ohne zusätzliches Befestigungselement gewährleistet ist.

An den einzelnen Bestückungsplätzen 23 ist zusätzlich zum Trägerstift 1 ein Zusatzträgerstift 35 vorgesehen. Der Zusatzträgerstift 35 erstreckt sich mit Abstand zum zugeordneten Trägerstift 1 und wie dieser quer und insbesondere rechtwinkelig zu der Ausdehnungsebene 22, in der der Kettenstrang 17 verläuft.

Indem zwischen einem jeweiligen Trägerstift 1 und Zusatzträgerstift 35 eine starre Verbindung vorliegt, werden die beiden Stifte 1, 35 beim Übergang zwischen einem linearen und einem gekrümmten Kettenstrangabschnitt gemeinsam relativ zum Kettenstrang 17 verschwenkt. Das oben hinsichtlich des Trägerstiftes 1 geschilderte Ausschwenkverhalten kann somit bei entsprechender Anordnung auch bei den Zusatzträgerstiften 35 auftreten.

Der Zusatzträgerstift 35 ist zweckmäßigerweise, bezogen auf die Transportrichtung 16, dem zugeordneten Trägerstift 1 vorgelagert. Beim Ausführungsbeispiel ist ferner im ungekrümmten, linearen Zustand des Kettenstranges 17 der zwischen dem Trägerstift 1 und der Strang-Längsachse 19 gemessene Abstand gleichgroß wie der Abstand zwischen der Strang-Längsachse 19 und dem zugeordneten Zusatzträgerstift 35.

Gleichwohl ist das absolute Maß des Verschwenkens des Trägerstiftes 1 größer als das des zugeordneten Zusatzträgerstiftes 35, weil sein Abstand zum Befestigungsabschnitt 26 und somit sein Hebelarm größer ist als der des Zusatzträgerstiftes 35. Letzterer sitzt an einem ebenfalls starr mit dem Befestigungsabschnitt 26 verbundenen Zusatztragarm 36, der bevorzugt in Verlängerung des Tragarmes 27 angeordnet ist und zusammen mit diesem einen einstückigen Tragabschnitt 37 bilden kann, der Bestandteil des Tragelementes 25 ist. Der Zusatztragarm 36 ist zweckmäßigerweise kürzer als der Tragarm 27.

Zweckmäßigerweise liegen der Trägerstift 1 und der diesem zugeordnete Zusatzträgerstift 35 auf einer Geraden 38, die mit Bezug zur Strang-Längsachse 19 geneigt verläuft. Dabei kann insbesondere vorgesehen sein, dass der Trägerstift 1 und der Zusatzträgerstift 35 im ungekrümmten, linearen Zustand des Kettenstranges 17 auf einander entgegengesetzten Seiten der Strang-Längsachse 19 liegen.

Bedingt durch die mit Bezug zur Strang-Längsachse 19 schräge Ausrichtung der den Trägerstift 1 und den Zusatzträgestift 35 enthaltenden Geraden 38 wird erreicht, dass ihre Hauptfunktionen in Abhängigkeit von der momentan entlang der Transportrichtung 16 eingenommenen Position variieren. Dies wird anhand der Fig. 2, 5 und 6 gut veranschaulicht.

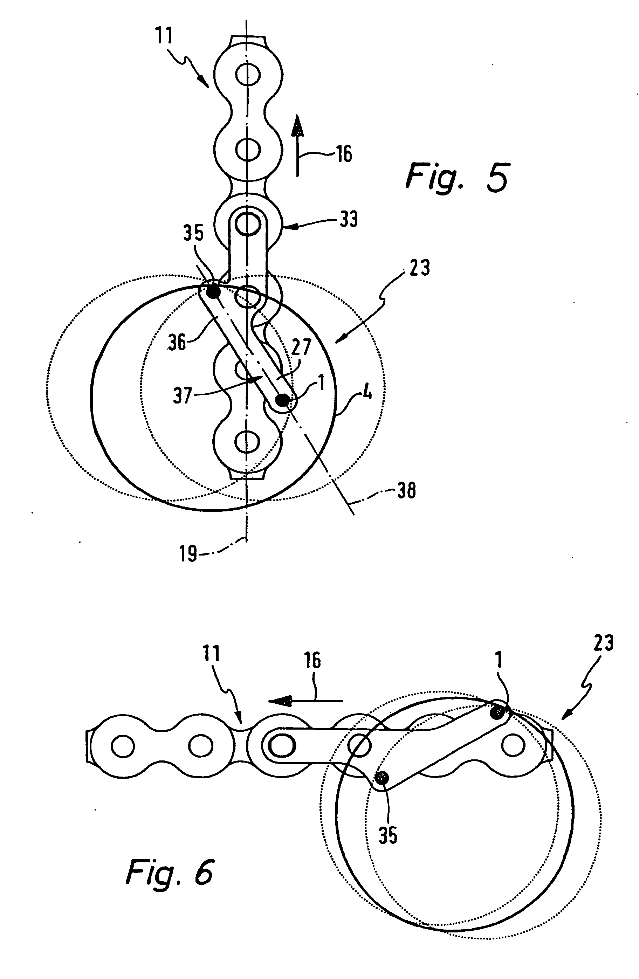

Befindet sich der Bestückungsplatz 23 in dem eine aufsteigende Bewegung ausführenden Kettenstrangabschnitt 33 gemäß Fig. 5, übernimmt der in Transportrichtung 16 vorgelagerte Zusatzträgerstift 35 die Tragfunktion in Bezug auf den aufgesteckten Hohlkörper 4, während der tiefer liegende und gleichzeitig etwas zur Seite versetzte Trägerstift 1 als Anschlag fungiert, der die gepunktet angedeutete mögliche Schwenkbewegung des Hohlkörpers 4 begrenzt.

Gelangt der Bestückungsplatz 23 in den Bereich eines ersten Umlenkrades 12, ergibt sich aufgrund der erläuterten Schwenkbewegung eine allmähliche Veränderung der relativ zueinander eingenommenen Höhenposition von Trägerstift 1 und Zusatzträgerstift 35. Letzterer senkt sich beim Durchlaufen des aus Fig. 2 hervorgehenden gekrümmten Kettenstrangabschnittes allmählich unter das Niveau des Trägerstiftes 1 ab, sodass nun die eigentliche Tragfunktion vom Trägerstift 1 ausgeführt wird, der den Hohlkörper 4 vom Zusatzträgerstift 35 übernimmt.

Dieser in Fig. 6 angedeutete Zustand stellt sich im Übrigen auch dann ein, wenn der Kettenstrang 17 horizontal ausgerichtet ist.

Nun hat der Trägerstift 1 die maßgebliche Tragfunktion, während der Zusatzträgerstift 35 als Anschlag zur Begrenzung der Pendelbewegung des Hohlkörpers 4 fungiert.

Es ergibt sich somit insgesamt während jeder Transportphase eine Stabilisierung der Aufhängung der Hohlkörper 4 mit reduziertem Pendelhub.

Begünstigend auf die Stabilität wirkt es sich aus, wenn die einander zugeordneten Trägerstifte 1 und Zusatzträgerstifte 35 eines jeweiligen Bestückungsplatzes 23 im Bereich ihrer dem Kettenstrang 17 entgegengesetzten Endabschnitte 43 unter Bildung eines Trägerbügels 44 fest miteinander verbunden sind (Fig. 2 bis 4 und 7).

Von Vorteil ist es, wenn im Bereich des freien Endes des Trägerbügels 44 eine insbesondere kreisbogenförmig gekrümmte Abrollfläche 45 vorgesehen ist, auf der der aufgesteckte Hohlkörper 4 mit seinem momentan oben liegenden Innenumfangsabschnitt aufliegt. Ändert sich nun die Orientierung des Trägerbügels 44 aufgrund des Verschwenkens des zugeordneten Tragelementes 25, kann der Hohlkörper 4 mit seinem Innenumfang beim Übergang zwischen den beiden Stiften 1, 35 auf der Abrollfläche 45 ruckfrei abrollen. Dadurch wird die Pendelneigung des Hohlkörpers 4 beträchtlich reduziert.

Beim Ausführungsbeispiel ist die Abrollfläche 45 von einem scheibenartigen Abrollelement 46 definiert, das am freien Ende des Trägerbügels 44 befestigt ist.

## Patentansprüche

1. Transporteinrichtung für an ihrer Oberfläche zu behandelnde und/oder bereits behandelte Hohlkörper (4) wie Dosen, Tuben, Hülsen oder dergleichen, mit einer Transportkette (11), die einen Kettenstrang (17) mit aufeinanderfolgenden Kettengliedern (18) aufweist, an dem an in Strang-Längsrichtung (19) beabstandeten Bestückungsplätzen (23) jeweils ein zur lösbaren Bestückung mit einem Hohlkörper (4) vorgesehener, quer abstehender Trägerstift (1) angeordnet ist, wobei die Transportkette (11) ausgebildet ist, um im Betrieb unter anderem um mindestens ein Umlenkrad (12, 13) umzulaufen und dabei eine Umlaufbewegung entlang einer gekrümmten Umlaufbahn auszuführen, wobei die Trägerstifte (1) an vom Kettenstrang (17) wegragenden Tragarmen (27) angeordnet sind, die bei sich krümmendem Kettenstrang (17) unter Mitnahme des zugehörigen Trägerstiftes (1) vom Krümmungszentrum (34) weg nach außen schwenken, wobei sich der Abstand der Trägerstifte (1) zum Kettenstrang (17) verändert, **dadurch gekennzeichnet, dass** an den Bestückungsplätzen (23) zusätzlich zu dem Trägerstift (1) jeweils mindestens ein zu dem Trägerstift (1) beabstandeter Zusatzträgerstift (35) vorgesehen ist, wobei zwischen Trägerstift (1) und Zusatzträgerstift (35) eine starre Verbindung vorliegt, sodass die Stifte bei sich krümmendem Kettenstrang (17) gemeinsam relativ zum Kettenstrang (17) verschwenkt werden, wobei die einander zugeordneten Trägerstifte (1) und Zusatzträgerstifte (35) im Bereich ihrer dem Kettenstrang (17) entgegengesetzten Endabschnitte (43) unter Bildung eines Trägerbügels (44) miteinander verbunden sind.

2. Transporteinrichtung nach Anspruch 1, **dadurch gekennzeichnet, dass** die Tragarme (27) jeweils derart starr mit einem Kettenglied (18) verbunden sind, dass sie dessen Orientierungsänderungen unmittelbar mitmachen.

3. Transporteinrichtung nach Anspruch 1 oder 2, **dadurch gekennzeichnet, dass** die Tragarme (27) jeweils Bestandteil eines am Kettenstrang (17) befestigten Tragelementes (25) sind.

4. Transporteinrichtung nach Anspruch 3, **dadurch gekennzeichnet, dass** das Tragelement (25) einen zum einen an dem Kettenstrang (17) fixierten und zum anderen starr mit dem zugeordneten Tragarm (27) verbundenen Befestigungsaschnitt (26) aufweist.

5. Transporteinrichtung nach Anspruch 4, **gekennzeichnet durch** eine einstückige Ausgestaltung von Tragarm (27) und Berestigungsabsehnitt (26).

6. Transporteinrichtung nach Anspruch 4 oder 5, **dadurch gekennzeichnet, dass** der Trägerstift (1) an dem dem Befestigungsabschnitt (26) entgegengesetzten freien Endbereich des Tragarmes (27) angeordnet ist.

7. Transporteinrichtung nach einem der Ansprüche 4 bis 6, **dadurch gekennzeichnet, dass** das Tragelement (25) mit seinem Befestigungsabschnitt (26) seitlich an einem Ketten-glied (18) angeordnet ist.

8. Transporteinrichtung nach einem der Ansprüche 4 bis 7, **dadurch gekennzeichnet, dass** die Kettenglieder (18) in Strang-Längsrichtung abwechselnd aufeinanderfolgend angeordnete Zwischenglieder (18a) und Verbindungsglieder (18b) enthalten, wobei die Verbindungsglieder (18b) jeweils zwei quer zur Strang-Längsrichtung beabstandete Verbindungslaschen (20) und zwei sich mit Abstand zueinander zwischen den Verbindungslaschen (20) erstreckende, das jeweils vorgeordnete und nachgeordnete Zwischenglied (18b) quer zur Strang-Längsrichtung durchsetzende Verbindungsbolzen (21) aufweisen, wobei die Befestigungsabschnitte (26) der Tragelemente (25) an den Verbindungsbolzen (21) fixiert sind.

9. Transporteinrichtung nach Anspruch 8, **dadurch gekennzeichnet, dass** bei den mit einem Tragelement (25) bestückten Verbindungsgliedern (18b) eine der beiden Verbindungslaschen (20) unmittelbar vom Befestigungsabschnitt (26) des betreffenden Tragelements (25) gebildet ist.

10. Transporteinrichtung nach Anspruch 8, **dadurch gekennzeichnet, dass** bei den mit einem Tragelement (25) bestückten Verbindungsgliedern (18b) das Tragelement (25) jeweils auf einer gesonderten Verbindungslasche (20) sitzt.

11. Transporteinrichtung nach einem der Ansprüche 1 bis 10, **dadurch gekennzeichnet, dass** die Trägerstifte (1) derart an den Tragarmen (27) angeordnet sind, dass sie bereits im ungekrümmten, linearen Zustand des Kettenstranges (17) mit Abstand außen neben der Strang-Längsachse (19) angeordnet sind.

12. Transporteinrichtung nach einem der Ansprüche 1 bis 11, **dadurch gekennzeichnet, dass** die Tragarme (27) im ungekrümmten, linearen Zustand des Kettenstranges (17) schräg zur Strang-Längsachse (19) ausgerichtet sind.

13. Transporteinrichtung nach einem der Ansprüche 1 bis 12, **dadurch gekennzeichnet, dass** der Trägerstift (1) und der diesem zugeordnete Zusatzträgerstift (35) im ungekrümmten, linearen Zustand des Kettenstranges (17) in der Strang-Längsrichtung zueinander beabstandet sind.

14. Transporteinrichtung nach einem der Ansprüche 1 bis 13, **dadurch gekennzeichnet, dass** im ungekrümmten, linearen Zustand des Kettenstranges (17) der Abstand zwischen dem Trägerstift (1) und der Strang-Längsachse (19) etwa gleichgroß ist wie der Abstand zwischen dem zugeordneten Zusatzträgerstift (35) und der Strang-Längsachse (19).

15. Transporteinrichtung nach einem der Ansprüche 1 bis 14,
**dadurch gekennzeichnet, dass** der Trägerstift (1) und der diesem zugeordnete Zusatzträgerstift (35) im ungekrümmten, linearen Zustand des Kettenstranges (17) auf einander entgegengesetzten Seiten der Strang-Längsachse (19) liegen.

16. Transporteinrichtung nach einem der Ansprüche 1 bis 15, **dadurch gekennzeichnet, dass** der Trägerstift (1) und der Zusatzträgerstift (35) auf einer Geraden (38) liegen, die geneigt zur Strang-Längsachse (19) verläuft.

17. Transporteinrichtung nach einem der Ansprüche 1 bis 16, **dadurch gekennzeichnet, dass** ein jeweiliger Zusatzträgerstift (35) dem zugeordneten Trägerstift (1) in der Transportrichtung (16) der Transportkette (11) vorgelagert ist.

18. Transporteinrichtung nach einem der Ansprüche 1 bis 17, **dadurch gekennzeichnet, dass** der Zusatzträgerstift (35) an einem starr mit dem Tragarm (27) verbundenen Zusatztragarm (36) angeordnet ist.

19. Transporteinrichtung nach Anspruch 18, **dadurch gekennzeichnet, dass** der Tragarm (27) und der Zusatztragarm (36) einstückiger Bestandteil eines Tragabschnittes (37) eines über einen Befestigungsabschnitt (26) am Kettenstrang (17) festgelegten Tragelementes (25) sind.

20. Transporteinrichtung nach einem der Anspruche 1 bis 19, **dadurch gekennzeichnet, dass** im Verbindungsbereich der einander zugeordneten Trägerstifte (1) und Zusatzträgerstifte (35) eine insbesondere kreisbogenförmig gekrümmte Abroll-fläche (45) für den jeweils aufgesteckten Hohlkörper (4) vorgesehen ist.

21. Transporteinrichtung nach Anspruch 20, **dadurch gekennzeichnet, dass** die Abrollfläche (45) von einem scheibenartigen Abrollelement (46) definiert ist.

22. Transporteinrichtung nach einem der Ansprüche 1 bis 21, **gekennzeichnet durch** mehrere Umlenkräder (12, 13), um die die Transportkette (11) abwechselnd im Bereich nach oben und nach unten weisender Umfangsabschnitte (14, 15) umläuft.

## Claims

1. Conveyor system for hollow bodies (4) such as tins, tubes, cartridges or the like, to be dealt with or already dealt with on its surface, with a chain carrier (11) which has a chain strand (17) with consecutive chain links (18), on which are arranged, at mounting points (23) spaced apart in the strand longitudinal direction (19), support pins (1) extending at right-angles and each provided for the releasable mounting of a hollow body (4), wherein the chain carrier (11) is designed to run in operation amongst other things around at least one guide wheel (12, 13) and in so doing to execute a circulatory movement along a curved orbit, wherein the support pins (1) are fitted on to support arms (27) extending away from the chain strand (17) and, as the chain strand (17) curves, swinging outwards away from the centre of curvature (34) and taking the associated support pin (1) with them, wherein the distance of the support pins (1) from the chain strand (17) varies, **characterised in that** there is provided at the mounting points (23) in addition to the support pin (1) in each case at least one supplementary support pin (35) at a distance from the support pin (1), wherein there is a rigid connection between support pin (1) and supplementary support pin (35) so that the pins are swivelled together relative to the chain strand (17) as the chain strand (17) curves, wherein the support pins (1) and supplementary support pins (35) assigned to one another are joined together in the area of their end sections (43) opposite the chain strand (17), to form a support bracket (44).

2. Conveyor system according to claim 1, **characterised in that** the support arms (27) are each connected to a chain link (18) in such a way that they directly follow its changes in orientation.

3. Conveyor system according to claim 1 or 2, **characterised in that** the support arms (27) are each part of a support element (25) fixed to the chain strand (17).

4. Conveyor system according to claim 3, **characterised in that** the support element (25) has a mounting section (26) which is one the one hand fixed to the chain strand (17) and on the other hand is rigidly connected to the assigned support arm (27).

5. Conveyor system according to claim 4, **characterised by** the support arm (27) and the mounting section (26) forming an integral unit.

6. Conveyor system according to claim 4 or 5, **characterised in that** the support pin (1) is located on the free end section of the support arm (27) opposite the mounting section (26).

7. Conveyor system according to any of claims 4 to 6, **characterised in that** the support element (25) with its mounting section (26) is fitted to the side of a chain link (18).

8. Conveyor system according to any of claims 4 to 7, **characterised in that** the chain links (18) contain intermediate links (18a) and connecting links (18b), alternating consecutively in the strand longitudinal direction, wherein the connecting links (18b) each have two connection tabs (20) spaced apart at right-angles to the strand longitudinal direction, and two connecting pins (21) extending at a distance from one another between the connection tabs (20), and passing through the respective previous and successive connecting links (18b) at right-angles to the strand longitudinal direction, wherein the mounting sections (26) of the support elements (25) are fixed at the connecting pins (21).

9. Conveyor system according to claim 8 **characterised in that**, when the connecting links (18b) are equipped with a support element (25), one of the two connection tabs (20) is formed directly by the mounting section (26) of the support element (25) concerned.

10. Conveyor system according to claim 8 **characterised in that**, when the connecting links (18b) are equipped with a support element (25), each support element (25) rests on a separate connection tab (20).

11. Conveyor system according to any of claims 1 to 10, **characterised in that** the support pins (1) are mounted on the support arms (27) in such a way that, in the uncurved, linear state of the chain strand (17), they are already arranged with spacing outside and alongside the strand longitudinal axis (19).

12. Conveyor system according to any of claims 1 to 11 **characterised in that**, in the uncurved, linear state of the chain strand (17), the support arms (27) are aligned at an angle to the strand longitudinal axis (19).

13. Conveyor system according to any of claims 1 to 12, **characterised in that** the support pin (1) and its assigned supplementary support pin (35), in the uncurved, linear state of the chain strand (17), are spaced apart from one another in the strand longitudinal direction.

14. Conveyor system according to any of claims 1 to 13, **characterised in that**, in the uncurved, linear state of the chain strand (17), the distance between the support pin (1) and the strand longitudinal axis (19) is approximately equal to the distance between the assigned supplementary support pin (35) and the strand longitudinal axis (19).

15. Conveyor system according to any of claims 1 to 14, **characterised in that**, in the uncurved, linear state of the chain strand (17), the support pin (1) and its assigned supplementary support pin (35) lie on opposite sides of the strand longitudinal axis (19).

16. Conveyor system according to any of claims 1 to 15, **characterised in that** the support pin (1) and the supplementary support pin (35) lie on a straight line (38) which runs at an angle to the strand longitudinal axis (19).

17. Conveyor system according to any of claims 1 to 16, **characterised in that** each supplementary support pin (35) is located ahead of the assigned support pin (1) in the direction of movement (16) of the chain carrier (11).

18. Conveyor system according to any of claims 1 to 17, **characterised in that** the supplementary support pin (35) is mounted on a supplementary support arm (36) connected rigidly to the support arm (27).

19. Conveyor system according to claim 18, **characterised in that** the support arm (27) and the supplementary support arm (36) form a integral part of a support section (37) of a support element (25) fixed to the chain strand (17) via a mounting section (26).

20. Conveyor system according to any of claims 1 to 19, **characterised in that** a curved rolling surface (45), in particular circular, is provided for the respectively mounted hollow bodies (4), in the connection zone of the support pins (1) and supplementary support pins (35) assigned to one another.

21. Conveyor system according to claim 20, **characterised in that** the rolling surface (45) is defined by a disc-like rolling element (46).

22. Conveyor system according to any of claims 1 to 21, **characterised by** several guide wheels (12, 13), around which the chain carrier (11) runs alternately in the area of upwards and downwards facing peripheral sections (14, 15).

## Revendications

1. Dispositif de transport pour des corps creux (4) à traiter et/ou déjà traités à leur surface, comme des boîtes, des tubes, des enveloppes et analogues, avec une chaîne de transport (11) qui présente un brin de chaîne (17) avec des éléments de chaîne successifs (18), brin sur lequel est placé à chaque fois, en des emplacements de montage (23) espacés dans la direction longitudinale (19) du brin, un ergot porteur (1) en saillie transversale prévu pour porter de manière amovible un corps creux (4), la chaîne de transport (11) étant configurée pour, en service, passer entre autres autour d'au moins une roue de renvoi (12, 13) et exécuter ainsi un mouvement de circulation le long d'une voie de circulation courbe, les ergots porteurs (1) étant placés sur des bras porteurs (27) formant saillie depuis le brin de chaîne (17), qui pivotent vers l'extérieur quand le brin de chaîne (17) s'incurve en écartant du centre de courbure (34) l'ergot porteur (1) associé, la distance des ergots porteurs (1) par rapport au brin de chaîne (17) variant, **caractérisé en ce qu'**aux emplacements de montage (23), en plus de l'ergot porteur (1), il est prévu à chaque fois au moins un ergot porteur additionnel (35) espacé de l'ergot porteur (1), une liaison rigide étant présente entre l'ergot porteur (1) et l'ergot porteur additionnel (35), de sorte que, quand le brin de chaîne (17) s'incurve, les deux ergots sont pivotés en commun par rapport au brin de chaîne (17), les ergots porteurs (1) et ergots porteurs additionnels (17) mutuellement associés étant reliés entre eux au niveau de leurs sections d'extrémité (43) opposées au brin de chaîne (17) en formant un arceau porteur (44).

2. Dispositif de transport selon la revendication 1, **caractérisé en ce que** les bras porteurs (27) sont reliés chacun rigidement à un élément de chaîne (18) de telle manière qu'ils suivent directement ses variations d'orientation.

3. Dispositif de transport selon la revendication 1 ou 2, **caractérisé en ce que** les bras porteurs (27) font partie chacun d'un élément porteur (25) fixé sur le brin de chaîne (17).

4. Dispositif de transport selon la revendication 3, **caractérisé en ce que** l'élément porteur (25) présente une section de fixation (26) fixée d'une part au brin de chaîne (17) et reliée rigidement d'autre part au bras porteur associé (27).

5. Dispositif de transport selon la revendication 4, **caractérisé par** une réalisation d'un seul tenant du bras porteur (27) et de la section de fixation (26).

6. Dispositif de transport selon la revendication 4 ou 5, **caractérisé en ce que** l'ergot porteur (1) est placé sur la partie d'extrémité libre du bras porteur (27) opposée à la section de fixation (26).

7. Dispositif de transport selon l'une des revendications 4 à 6, **caractérisé en ce que** l'élément porteur (25) est placé latéralement sur un élément de chaîne (18) avec sa section de fixation (26).

8. Dispositif de transport selon l'une des revendications 4 à 7, **caractérisé en ce que** les éléments de chaîne (18) contiennent des éléments intermédiaires (18a) et éléments de liaison (1 8b) placés successivement en alternance dans la direction longitudinale du brin, les éléments de liaison (18b) présentant chacun deux pattes de liaison (20) espacées transversalement à la direction longitudinale du brin et deux goujons de liaison (21) s'étendant à distance l'un de l'autre entre les pattes de liaison (20) et traversant l'élément intermédiaire (18b) placé avant et celui placé après transversalement à la direction longitudinale du brin, les sections de fixation (26) des éléments porteurs (25) étant fixées sur les goujons de fixation (21).

9. Dispositif de transport selon la revendication 8, **caractérisé en ce que**, quand les éléments de liaison (18b) sont équipés d'un élément porteur (25), l'une des deux pattes de liaison (20) est formée directement par la section de fixation (26) de l'élément porteur (25) concerné.

10. Dispositif de transport selon la revendication 8, **caractérisé en ce que**, quand les éléments de liaison (18b) sont équipés d'un élément porteur (25), l'élément porteur (25) se trouve à chaque fois sur une patte de liaison (20) dédiée.

11. Dispositif de transport selon l'une des revendications 1 à 10, **caractérisé en ce que** les ergots porteurs (1) sont placés de telle manière sur les bras porteurs (27) que, même dans l'état rectiligne non incurvé du brin de chaîne (17), ils sont placés à distance à l'extérieur près de l'axe longitudinal (19) du brin.

12. Dispositif de transport selon l'une des revendications 1 à 11, **caractérisé en ce que**, dans l'état rectiligne non incurvé du brin de chaîne (17), les bras porteurs (27) sont orientés obliquement par rapport à l'axe longitudinal (19) du brin.

13. Dispositif de transport selon l'une des revendications 1 à 12, **caractérisé en ce que**, dans l'état rectiligne non incurvé du brin de chaîne (17), l'ergot porteur (1) et l'ergot porteur additionnel (35) associé à lui sont espacés l'un de l'autre dans la direction longitudinale du brin.

14. Dispositif de transport selon l'une des revendications 1 à 13, **caractérisé en ce que**, dans l'état rectiligne non incurvé du brin de chaîne (17), la distance entre l'ergot porteur (1) et l'axe longitudinal (19) du brin est approximativement aussi grande que la distance entre l'ergot porteur additionnel (35) associé et l'axe longitudinal (19) du brin.

15. Dispositif de transport selon l'une des revendications 1 à 14, **caractérisé en ce que**, dans l'état rectiligne non incurvé du brin de chaîne (17), l'ergot porteur (1) et l'ergot porteur additionnel (35) associé à lui se trouvent sur des côtés mutuellement opposés de l'axe longitudinal (19) du brin.

16. Dispositif de transport selon l'une des revendications 1 à 15, **caractérisé en ce que** l'ergot porteur (1) et l'ergot porteur additionnel (35) se trouvent sur une droite (38) qui est inclinée par rapport à l'axe longitudinal (19) du brin.

17. Dispositif de transport selon l'une des revendications 1 à 16, **caractérisé en ce qu'**un ergot porteur additionnel (35) respectif est placé avant l'ergot porteur (1) associé dans la direction de transport (16) de la chaîne de transport (11).

18. Dispositif de transport selon l'une des revendications 1 à 17, **caractérisé en ce que** l'ergot porteur additionnel (35) est placé sur un bras porteur additionnel (36) relié rigidement au bras porteur (27).

19. Dispositif de transport selon la revendication 18, **caractérisé en ce que** le bras porteur (27) et le bras porteur additionnel (36) font partie solidaire d'une section porteuse (37) d'un élément porteur (25) fixé au brin de chaîne (17) par l'intermédiaire d'une section de fixation (26).

20. Dispositif de transport selon l'une des revendications 1 à 19, **caractérisé en ce que**, dans la zone de liaison des ergots porteurs (1) et ergots porteurs additionnels (35) associés, il est prévu une surface de roulement (45) incurvée en particulier en arc de cercle pour les corps creux (4) enfilés dessus.

21. Dispositif de transport selon la revendication 20, **caractérisé en ce que** la surface de roulement (45) est définie par un élément de roulement (46) de type disque.

22. Dispositif de transport selon l'une des revendications 1 à 21, **caractérisé par** plusieurs roues de renvoi (12, 13) autour desquelles la chaîne de transport (11) circule en alternance au niveau de sections périphériques (14, 15) dirigées vers le haut et vers le bas.
